# EUROPEAN PATENT APPLICATION

(11) **EP 4 769 640 A1**
(43) Date of publication of application: **01.07.2026**
(21) Application number: 24889096.4
(22) Date of filing: 05.11.2024
(51) Int. Cl.: H01M 10/48, H01M 50/691, H01M 10/04, G01M 3/16, H01M 50/178, H01M 50/502

(54) **BATTERY MODULE CAPABLE OF DETECTING ELECTROLYTE LEAKAGE**

(30) Priority: 06.11.2023 KR 20230152065
(71) Applicant: LG Energy Solution, Ltd., Seoul 07335 (KR)
(72) Inventor: UHM, Jae Yong, Daejeon 34122 (KR)
(74) Representative: Plasseraud IP
(86) International application number: PCT/KR2024/017328
(87) International publication number: WO 2025/100909

(57) **Abstract**

The present invention provides a battery module 10 capable of detecting leakage of electrolyte, including: a housing 100 including a main frame 110 including a bottom 112 and a first end frame 120 and a second end frame 130 covering two ends of the main frame 110 in a first direction, respectively; one or more battery cells 200 dispsoed in an internal space V of the housing 100; and a first leakage sensor 300 dispsoed on an upper surface of the bottom 112 and detecting electrolyte leaking from the one or more battery cells 200. The main frame 110 may further include a first notch 115 provided at a first end of the first direction of the bottom 112 and connecting above and below the bottom 112 to discharge leaked electrolyte to the outside. The first leakage sensor 300 may be disposed adjacent to the first notch 115 and disposed in the main frame 110 inner than the first end of the first direction of the first notch 115.

## Description

### [TECHNICAL FIELD]

This application claims the benefit of priority based on Korean Patent Application No. 10-2023-0152065 filed on November 6, 2023, entire content disclosed in the document of the patent applications is comprised as a part of this specification.

The present invention relates to a battery module capable of detecting leakage of electrolyte, and in particular, to a battery module capable of: detecting leakage of electrolyte quickly, accurately and reliably; preventing accidents such as fires in advance; facilitating the installation and maintenance of leakage sensors; and implementing leakage sensors at low cost with simple constitution.

### [BACKGROUND ART]

As the development of technology and demand for mobile devices such as smartphones, laptops, and digital cameras increase, technology for secondary batteries capable of charge and discharge is becoming active. In addition, secondary batteries are applied to electric vehicles (EVs), hybrid electric vehicles (HEVs), plug-in hybrid electric vehicles (P-HEVs), and energy storage devices (ESSs) as an alternative energy source to fossil fuels that generate air pollutants.

Currently, the types of widely-used secondary batteries include lithium-ion batteries, lithium polymer batteries, nickel-cadmium batteries, nickel-metal hydride batteries, and nickel-zinc batteries. Generally, such unit secondary battery cells are connected in series or in parallel according to the required output voltage or charge and discharge capacity to form a battery module.

In particular, pouch-type lithium ion batteries with a structure in which a stack-type or stack/folding-type electrode assembly is accommodated in a pouch-type battery case made of aluminum laminate sheets are gradually increasing in usage due to the advantages thereof such as low manufacturing cost and high energy density.

However, pouch-type lithium ion batteries is problematic due to a leakage of flammable substances such as electrolytes when the fusion-sealed portion is separated, resulting in a fire.

Therefore, a battery module capable of accurately and reliably detecting leakage of electrolyte and preventing accidents such as fires is necessary.

In addition, a battery module capable of detecting leakage of electrolyte wherein installation and maintenance of leakage sensor is facilitated at low cost with a simple constitute is necessary.

Prior art pertinent to the present invention is Korean Patent Publication No. 10-2023-0092218.

### [DISCLOSURE]

### [TECHNICAL PROBLEM]

In order to solve above-described problems, it is an object of the present invention is to provide a battery module capable of detecting leakage of electrolyte quickly, accurately and reliably and preventing accidents such as fire in advance.

It is an object of the present invention to provide a battery module capable of detecting leakage of electrolyte facilitating the installation and maintenance of leakage sensors.

It is an object of the present invention to provide a battery module capable of detecting leakage of electrolyte wherein the structure of leakage sensor is simplified and the leakage sensor is miniaturized and light.

It is an object of the present invention to provide a battery module capable of detecting leakage of electrolyte and implementing leakage sensors at low cost with simple constitution.

It is an object of the present invention to provide a battery module capable of detecting leakage of electrolyte in real time.

It is an object of the present invention to provide a battery module capable of detecting leakage of electrolyte with improved performance or sensitivity of the leakage sensor.

It is an object of the present invention to provide a battery module capable of detecting leakage of electrolyte with improved structural stability and insulating property.

The technical problems to be solved by the present invention are not limited to the objects described above, and other objects and advantages of the present invention that are not described may be understood through the following description and will be more clearly understood by the examples of the present invention. Additionally, it is apparent that the objects and advantages of the present invention may be embodied by the means and combinations thereof indicated in the claims.

### [TECHNICAL SOLUTION]

In order to solve the above-described problem, the present invention provides a battery module 10 capable of detecting leakage of electrolyte, including: a housing 100, one or more battery cells 200; and a first leakage sensor 300.

The housing 100 may include: a main frame 110; a first end frame 120; and a second end frame 130.

The main frame 110 may include a bottom 112 and a pair of side walls 113 and 114.

The main frame 110 may include a bottom 112 extending in a first direction intersecting a vertical direction and in a second direction intersecting the vertical direction and the first direction.

The pair of side walls 113 and 114 may be coupled to both ends of the bottom 112 in the second direction, respectively.

The pair of side walls 113 and 114 may be extend in the vertical direction and the first direction.

The first end frame 120 and the second end frame 130 may cover both ends of the main frame 110 in the first direction.

The one or more battery cells 200 may be arranged in an internal space V of the housing 100 defined by the main frame 110, the first end frame 120 and the second end frame 130.

The first leakage sensor 300 may be disposed on an upper surface of the bottom 112.

The first leakage sensor 300 may detect a leaked electrolyte from the one or more battery cells 200.

The main frame 110 may further include a first notch 115.

The first notch 115 may be disposed at a first end of the first direction of the bottom 112 and recessed inward.

The first notch 115 may connect above and below the bottom 112 to discharge the leaked electrolyte out of the housing 100.

The first leakage sensor 300 may be disposed adjacent to the first notch 115.

The first leakage sensor 300 may be disposed in the main frame 110 inner than the first end of the first direction of the first notch 115.

In one embodiment, the one or more battery cells 200 may extend in the vertical direction and the first direction.

Each of the one or more battery cells 200 may include a first terminal 230.

The first terminal 230 may protrude to a first side of the first direction.

The first terminal 230 may be disposed at a first end portion of the first direction of the internal space V.

The one or more battery cells 200 may be arranged side by side in the second direction.

In one embodiment, the bottom 112 may include: a first bottom portion 1122; and a second bottom portion 1124.

The first bottom portion 1122 may correspond to a center portion of the bottom 112 in the first direction.

The second bottom portion 1124 may be located at a first side of the first direction of the first bottom portion 1122. The second bottom portion 1124 may have an upper surface lower than that of the first bottom portion 1122.

The first notch 115 may be provided at the first end of the first direction of the second bottom portion 1124.

The first leakage sensor 300 may be disposed at the second bottom portion 1124.

In one embodiment, each of the one or more battery cells 200 may include: a receptor 210; an extension 220; and a first terminal 230 and a second terminal 240.

The receptor 210 may accommodate an electrode assembly and an electrolyte.

The receptor 210 may extend in the vertical direction and the first direction.

The extension 220 may extend outward from an edge of the receptor 210.

The extension 220 may seal the receptor 210 with the electrode assembly and the electrolyte accommodated therein.

The first terminal 230 and the second terminal 240 may be connected to the electrode assembly.

The first terminal 230 and the second terminal 240 may protrude outward through the extension 220.

The extension 220 may include a first extension 222.

The first extension 222 may be provided at the first side of the first direction of the receptor 210.

The first terminal 230 may protrude to the first side of the first direction through the first extension 222.

The one or more battery cells 200 may be arranged side by side in the second direction.

The first bottom portion 1122 may face the receptor 210 of each of the one or more battery cells 200 in the vertical direction.

The second bottom portion 1124 may face the first extension 222 of each of the one or more battery cells 200 in the vertical direction.

In one embodiment, the main frame 110 may further include a first dam 117.

The first dam 117 may protrude upward from the upper surface of a first end portion of the first direction of the bottom 112.

The first dam 117 may extend in the second direction or extend obliquely in the first direction toward the second direction.

The first dam 117 may not extend in a first open section O1 in the second direction.

The first dam 117 may include a first severed portion E1 defining the first open section O1.

At least a portion of the leaked electrolytes may flow to the first notch 115 through a region adjacent to the first severed portion E1 and corresponding to the first open section O1.

The first leakage sensor 300 may be disposed adjacent to the first severed portion E1.

At least a portion of the first leakage sensor 300 may be disposed in the first open section O1.

In one embodiment, the first dam 117 may be provided at the first end of the first direction of the bottom 112.

Accordingly, the first open section O1 may at least partially overlap a first section S1 in which the first notch 115 is formed in the second direction.

In addition, the first severed portion E1 may at least partially overlap the first notch 115 in the first direction.

In the first direction, a second end of the first direction of the first severed portion E1 may be disposed at a point corresponding to the second end of the first direction of the first notch 115 or may be disposed at a second side of the first direction than the second end of the first direction of the first notch 115.

The first leakage sensor 300 may be disposed at the second side of the first direction than the first severed portion E1.

The first leakage sensor 300 may be disposed adjacent to the first severed portion E1.

At least a portion of the first leakage sensor 300 may be disposed at the first open section O1 or the first section S1.

In one embodiment, the first end frame 120 may at least partially cover the first notch 115 from above.

In one embodiment, the first leakage sensor 300 may include a conductor 320 forming an electric circuit.

At least one of a resistance, a current and a voltage of the electric circuit changes when the leaked electrolyte comes into contact with the conductor 320.

In one embodiment, the conductor 320 may include one or more first pole conductors 322 and one or more second pole conductors 324.

The one or more first pole conductors 322 and the one or more second pole conductors 324 may extend in a predetermined direction.

The one or more first pole conductors 322 and the one or more second pole conductors 324 may be alternately arranged side by side.

The one or more first pole conductors 322 and the one or more second pole conductors 324 may be spaced apart from each other by a predetermined distance.

The one or more first pole conductors 322 and the one or more second pole conductors 324 may form the electric circuit.

At least one of the resistance, the current and the voltage of the electric circuit may change when the leaked electrolyte comes into contact with at least one of the one or more first pole conductors 322 and at least one of the one or more second pole conductors 324 simultaneously such that the at least one of the one or more the first pole conductors 322 and the at least one of the one or more second pole conductors 324 are electrically connected via the leaked electrolyte.

In one embodiment, the one or more first pole conductors 322 may be connected to each other.

The one or more second pole conductors 324 may be connected to each other.

In one embodiment, the main frame 110 may further include a first dam 117.

The first dam 117 may protrude upward from the upper surface of a first end portion of the first direction of the bottom 112.

The first dam 117 may extend in the second direction or extend obliquely in the first direction toward the second direction.

The first dam 117 may not extend in a first open section O1 in the second direction.

The first dam 117 may include a first severed portion E1 defining the first open section O1.

At least a portion of the leaked electrolytes may flow to the first notch 115 through a region adjacent to the first severed portion E1 and corresponding to the first open section O1.

The first leakage sensor 300 may be disposed adjacent to the first severed portion E1.

At least a portion of the first leakage sensor 300 may be disposed in the first open section O1.

The predetermined direction may be parallel to an overall extending direction of the first dam 117.

In one embodiment, the battery module capable of detecting an electrolyte leakage may include: a first bus bar; and a first bus bar frame 510.

The first bus bar may be disposed at the first end portion of the first direction of the internal space V.

The first bus bar may be electrically connected to the first terminal 230 of each of the one or more battery cells 200.

The first bus bar frame 510 may be disposed above the first leakage sensor 300.

The first bus bar frame 510 may support the first bus bar.

In one embodiment, a lower end portion of the first bus bar frame 510 may be disposed at a second side of the first direction of the first leakage sensor 300.

In one embodiment, the battery module capable of detecting an electrolyte leakage may further include a second leakage sensor 400.

The second leakage sensor 400 may be disposed on the upper surface of the bottom 112.

The second leakage sensor 400 may detect the leaked electrolyte from the one or more battery cells 200.

The main frame 110 may further include a second notch 116.

The second notch 116 may be disposed at a second end of the first direction of the bottom 112 and recessed inward.

The second notch 116 may connect above and below the bottom 112 to discharge the leaked electrolyte out of the housing 100.

The second leakage sensor 400 may be disposed adjacent to the second notch 116.

The second leakage sensor 400 may be disposed in the main frame 110 inner than the second end of the first direction of the second notch 116.

### [ADVANTAGEOUS EFFECTS]

According to the embodiments of the present invention, a battery module 10 capable of detecting leakage of electrolyte may include: a housing 100; one or more battery cells 200; and a first leakage sensor 300. The housing 100 may include: a main frame 110; a first end frame 120; and a second end frame 130. The main frame 110 may include a bottom 112 and a pair of side walls 113 and 114. The main frame 110 may include a bottom 112 extending in a first direction intersecting a vertical direction and in a second direction intersecting the vertical direction and the first direction. The pair of side walls 113 and 114 may be coupled to both ends of the bottom 112 in the second direction, respectively. The pair of side walls 113 and 114 may be extend in the vertical direction and the first direction. The first end frame 120 and the second end frame 130 may cover both ends of the main frame 110 in the first direction. The one or more battery cells 200 may be arranged in an internal space V of the housing 100 defined by the main frame 110, the first end frame 120 and the second end frame 130. The first leakage sensor 300 may be disposed on an upper surface of the bottom 112. The first leakage sensor 300 may detect a leaked electrolyte from the one or more battery cells 200. The main frame 110 may further include a first notch 115. The first notch 115 may be disposed at a first end of the first direction of the bottom 112 and recessed inward. The first notch 115 may connect above and below the bottom 112 to discharge the leaked electrolyte out of the housing 100. The first leakage sensor 300 may be disposed adjacent to the first notch 115. The first leakage sensor 300 may be disposed in the main frame 110 inner than the first end of the first direction of the first notch 115.

Accordingly, the first leakage sensor 300 is not only disposed on the upper surface of the bottom 112 of the housing 100 where the electrolytes gather, but is also disposed adjacent to the first notch 115 where the electrolytes are discharged such that electrolyte leaked from the battery module 10 may be accurately and reliably detected and accidents such as fire may be prevented in advance.

In addition, since the first leakage sensor 300 is disposed at the first end of the bottom 112 in the first direction, the first leakage sensor 300 may be easily exposed to the outside. In particular, when the first end frame 120 is separable from the main frame 110, the first leakage sensor 300 may be easily exposed to the outside by separating and removing the first end frame 120. Accordingly, the installation and maintenance of the first leakage sensor 300 may be facilitated.

In addition, since the first leakage sensor 300 is disposed inside the main frame 110 rather than the first end of the first notch 115 in the first direction, the structure of the first leakage sensor 300 may be simplified, and the first leakage sensor 300 may be miniaturized and light. For example, the first leakage sensor 300 may not have a structure that surrounds the entire first notch 115.

According to the embodiments of the present invention, the one or more battery cells 200 may extend in the vertical direction and the first direction. Each of the one or more battery cells 200 may include a first terminal 230. The first terminal 230 may protrude to a first side of the first direction. The first terminal 230 may be disposed at a first end portion of the first direction of the internal space V. The one or more battery cells 200 may be arranged side by side in the second direction.

Accordingly, the first leakage sensor 300 may be disposed close to the first terminal 230 of the battery cell 200. As a result, the first leakage sensor 300 may be easily connected to an electrical component (e.g., ICB, Interconnect Circuit Board) disposed close to the terminal of the battery cell 200. Thus, the installation and maintenance of the first leakage sensor 300 may be facilitated.

According to the embodiments of the present invention, the bottom 112 may include: a first bottom portion 1122; and a second bottom portion 1124. The first bottom portion 1122 may correspond to a center portion of the bottom 112 in the first direction. The second bottom portion 1124 may be located at a first side of the first direction of the first bottom portion 1122. The second bottom portion 1124 may have an upper surface lower than that of the first bottom portion 1122. The first notch 115 may be provided at the first end of the first direction of the second bottom portion 1124. The first leakage sensor 300 may be disposed at the second bottom portion 1124.

Accordingly, the first leakage sensor 300 may be disposed not only at the second bottom portion 1124 where the electrolytes are easily collected due to low position, but also adjacent to the first notch 115 of the second bottom portion 1124 where the electrolytes are discharged. Accordingly, the electrolyte leaked from the battery module 10 may be accurately and reliably detected, and accidents such as fire may be prevented in advance.

According to the embodiments of the present invention, each of the one or more battery cells 200 may include: a receptor 210; an extension 220; and a first terminal 230 and a second terminal 240. The receptor 210 may accommodate an electrode assembly and an electrolyte. The receptor 210 may extend in the vertical direction and the first direction. The extension 220 may extend outward from an edge of the receptor 210. The extension 220 may seal the receptor 210 with the electrode assembly and the electrolyte accommodated therein. The first terminal 230 and the second terminal 240 may be connected to the electrode assembly. The first terminal 230 and the second terminal 240 may protrude outward through the extension 220. The extension 220 may include a first extension 222. The first extension 222 may be provided at the first side of the first direction of the receptor 210. The first terminal 230 may protrude to the first side of the first direction through the first extension 222. The one or more battery cells 200 may be arranged side by side in the second direction. The first bottom portion 1122 may face the receptor 210 of each of the one or more battery cells 200 in the vertical direction. The second bottom portion 1124 may face the first extension 222 of each of the one or more battery cells 200 in the vertical direction.

Accordingly, a second bottom portion 1124 having a low-positioned upper surface and provided with a first notch 115 is disposed under the first extension 222 surrounding and sealing the first terminal 230 to cause relatively easy electrolyte leakage such that electrolytes may be easily collected and discharged. Since the first leakage sensor 300 is disposed at the second bottom portion 1124 and adjacent to the first notch 115, the leakage of electrolyte from the battery module 10 may be detected quickly, accurately and reliably, and accidents such as fire may be prevented in advance.

In addition, even when the first extension 222 is provided with a protruding portion B (e.g., a bat ear) protrudes downward farther than the receptor 210 when spread in the vertical direction, the upper surface of the second bottom portion 1124 is positioned lower than the upper surface of the first bottom portion 1122 that supports the receptor 210 such that the protruding portion B may not be greatly bent or folded by the second bottom portion 1124. Accordingly, the sealing of the first extension 222 may be prevented from being released.

According to the embodiments of the present invention, the main frame 110 may further include a first dam 117. The first dam 117 may protrude upward from the upper surface of a first end portion of the first direction of the bottom 112. The first dam 117 may extend in the second direction or extend obliquely in the first direction toward the second direction. The first dam 117 may not extend in a first open section O1 in the second direction. The first dam 117 may include a first severed portion E1 defining the first open section O1. At least a portion of the leaked electrolytes may flow to the first notch 115 through a region adjacent to the first severed portion E1 and corresponding to the first open section O1. The first leakage sensor 300 may be disposed adjacent to the first severed portion E1. At least a portion of the first leakage sensor 300 may be disposed in the first open section O1.

Accordingly, the first leakage sensor 300 may be disposed not only at a location where electrolytes are easily collected by the first dam 117, but also at a location or nearby the location where electrolytes pass when discharged to the outside. As a result, the leakage of electrolyte from the battery module 10 may be accurately and reliably detected, and accidents such as fires may be prevented in advance.

According to the embodiments of the present invention, the first dam 117 may be provided at the first end of the first direction of the bottom 112. Accordingly, the first open section O1 may at least partially overlap a first section S1 in which the first notch 115 is formed in the second direction. In addition, the first severed portion E1 may at least partially overlap the first notch 115 in the first direction. In the first direction, a second end of the first direction of the first severed portion E1 may be disposed at a point corresponding to the second end of the first direction of the first notch 115 or may be disposed at a second side of the first direction than the second end of the first direction of the first notch 115. The first leakage sensor 300 may be disposed at the second side of the first direction than the first severed portion E1. The first leakage sensor 300 may be disposed adjacent to the first severed portion E1. At least a portion of the first leakage sensor 300 may be disposed at the first open section O1 or the first section S1.

Accordingly, the first leakage sensor 300 may be disposed inner than the first dam 117 at one end of the bottom 112 in the first direction where most of the electrolytes flowing to the first side of the housing 110 in the first direction gather. In addition, the first leakage sensor 300 may be disposed at or near a portion that the electrolytes passes when the electrolyte is discharged to the outside. As a result, the leakage of electrolyte from the battery module 10 may be accurately and reliably detected and accidents such as fire may be prevented in advance.

According to the embodiments of the present invention, the first end frame 120 may at least partially cover the first notch 115 from above.

Accordingly, the amount of electrolyte discharged to the outside through the first notch 115 without passing through the first leakage sensor 300 may be reduced. For example, the electrolyte flowing at the first side of the first direction than the first notch 115 or flowing above the first notch 115 or falling into the first notch 115 flow to the bottom 112 and then pass the first leakage sensor 300 rather than flowing directly into the first notch 115 due to the first end frame 120 which at least partially covers the first notch 115 from above. As a result, the accuracy of detection of the leakage of electrolyte from the battery module 10 may be improved.

According to the embodiments of the present invention, the first leakage sensor 300 may include a conductor 320 forming an electric circuit. At least one of a resistance, a current and a voltage of the electric circuit changes when the leaked electrolyte comes into contact with the conductor 320.

Accordingly, the first leakage sensor 300 may be easily implemented at low cost with a simple configuration. In addition, electrolyte leakage may be detected in real time.

According to the embodiments of the present invention, the conductor 320 may include one or more first pole conductors 322 and one or more second pole conductors 324. The one or more first pole conductors 322 and the one or more second pole conductors 324 may extend in a predetermined direction. The one or more first pole conductors 322 and the one or more second pole conductors 324 may be alternately arranged side by side. The one or more first pole conductors 322 and the one or more second pole conductors 324 may be spaced apart from each other by a predetermined distance. The one or more first pole conductors 322 and the one or more second pole conductors 324 may form the electric circuit. At least one of the resistance, the current and the voltage of the electric circuit may change when the leaked electrolyte comes into contact with at least one of the one or more first pole conductors 322 and at least one of the one or more second pole conductors 324 simultaneously such that the at least one of the one or more the first pole conductors 322 and the at least one of the the one or more second pole conductors 324 are electrically connected via the leaked electrolyte.

Accordingly, the first leakage sensor 300 may be easily implemented at low cost with a simple configuration.

In addition, since the leakage detection area or leakage detection width of the first leakage sensor 300 may be increased or the distance between the first pole conductor 322 and the second pole conductor 324 may be reduced, the performance or sensitivity of the first leakage sensor 300 may be improved.

According to the embodiments of the present invention, the one or more first pole conductors 322 may be connected to each other. The one or more second pole conductors 324 may be connected to each other.

Accordingly, the first leakage sensor 300 may be easily implemented at low cost with a simple configuration.

According to the embodiments of the present invention, the main frame 110 may further include a first dam 117. The first dam 117 may protrude upward from the upper surface of a first end portion of the first direction of the bottom 112. The first dam 117 may extend in the second direction or extend obliquely in the first direction toward the second direction. The first dam 117 may not extend in a first open section O1 in the second direction. The first dam 117 may include a first severed portion E1 defining the first open section O1. At least a portion of the leaked electrolytes may flow to the first notch 115 through a region adjacent to the first severed portion E1 and corresponding to the first open section O1. The first leakage sensor 300 may be disposed adjacent to the first severed portion E1. At least a portion of the first leakage sensor 300 may be disposed in the first open section O1. The predetermined direction may be parallel to an overall extending direction of the first dam 117.

Accordingly, the first pole conductor 322 and the second pole conductor 324 of the first leakage sensor 300 may effectively block the portion where the first dam 117 is severed and opened. As a result, the leakage of electrolyte from the battery module 10 may be accurately and reliably detected, and the first leakage sensor 300 may be easily implemented at low cost with a simple configuration, and also be miniaturized.

In addition, since the distance between the first pole conductor 322 and the second pole conductor 324 may be reduced, the performance or sensitivity of the first leakage sensor 300 may be improved.

According to the embodiments of the present invention, the battery module capable of detecting an electrolyte leakage may include: a first bus bar; and a first bus bar frame 510. The first bus bar may be disposed at the first end portion of the first direction of the internal space V. The first bus bar may be electrically connected to the first terminal 230 of each of the one or more battery cells 200. The first bus bar frame 510 may be disposed above the first leakage sensor 300. The first bus bar frame 510 may support the first bus bar.

Accordingly, the electrolyte that leaks from the first end of the battery cell 200 in the first direction and flows along the surface of the first bus bar frame 510 may easily gather at the bottom 112 and pass through the first leakage sensor 300. Accordingly, the leakage of electrolyte from the battery module 10 may be accurately and reliably detected, and accidents such as fire may be prevented in advance.

According to the embodiments of the present invention, a lower end portion of the first bus bar frame 510 may be disposed at a second side of the first direction of the first leakage sensor 300.

Accordingly, even when the first leakage sensor 300 is disposed at the bottom 112, the first bus bar frame 510 may be extended downward. When the first bus bar frame 510 extends downward, the first bus bar frame 510 may be stably supported by being in contact with the bottom 112 and interposed between the battery cell 200 and the bottom 112 to improve the insulating property. That is, not only the leakage of electrolyte from the battery cell 200 is accurately and reliably detected, but also the structural stability and insulating property of the battery module 10 may be improved.

According to the embodiments of the present invention, the battery module capable of detecting an electrolyte leakage may further include a second leakage sensor 400. The second leakage sensor 400 may be disposed on the upper surface of the bottom 112. The second leakage sensor 400 may detect the leaked electrolyte from the one or more battery cells 200. The main frame 110 may further include a second notch 116. The second notch 116 may be disposed at a second end of the first direction of the bottom 112 and recessed inward. The second notch 116 may connect above and below the bottom 112 to discharge the leaked electrolyte out of the housing 100. The second leakage sensor 400 may be disposed adjacent to the second notch 116. The second leakage sensor 400 may be disposed in the main frame 110 inner than the second end of the first direction of the second notch 116.

Accordingly, the first and second notches 115 and 116 are provided at two ends of the bottom 112 of the housing 100 in the first direction, and the first and second leakage sensors 300 and 400 are arranged on the upper surface of the bottom 112 adjacent to the first and second notches 115 and 116 such that the leakage of electrolyte from the battery module 10 may be accurately and reliably detected and accidents such as fire may be prevented in advance.

In addition, since the first and second leakage sensors 300 and 400 may be exposed to the outside, the installation and maintenance of the first and second leakage sensors 300 and 400 may be facilitated. For example, when the first and second end frames 120 and 130 are separated and removed from the main frame 110, the first and second leakage sensors 300 and 400 may be easily exposed to the outside.

In addition, since the first and second leakage sensors 300 and 400 are located inside the main frame 110 rather than the first ends of the first and second notches 115 and 116 in the first direction, the structure of the first and second leakage sensors 300 and 400 may be simplified, and also be miniaturized and light. For example, the first and second leakage sensors 300 and 400 may not necessarily have a structure that surrounds the entire first and second notches 115 and 116, respectively.

In addition to the advantageous effects described above, specific effects of the present invention will be described further while describing specific details of the present invention.

### [BRIEF DESCRIPTION OF DRAWINGS]

FIG. 1 is a perspective view illustrating a portion of a battery module capable of detecting leakage of electrolyte according to a first embodiment of the present invention.
FIGS. 2 and 3 are a bottom surface perspective view and an exploded perspective view, respectively, illustrating the portion of the battery module shown in FIG. 1 without the battery cells.
FIGS. 4 and 5 are sectional views enlarging the portion indicated by a dotted line in FIG. 1 taken along line 4-4' of FIG. 1.
FIGS. 6 and 7 are enlarged views illustrating the bottom and the first leakage sensor of the portion indicated by a dotted line in FIG. 1.
FIG. 8 is a perspective view illustrating the first leakage sensor of FIGS. 1 to 7.
FIG. 9 is a front view illustrating the battery cell of FIG. 1.
FIG. 10 is a view illustrating the structure of FIG. 5 with the battery cells.
FIG. 11 and FIG. 12 are enlarged sectional views enlarging a portion of a battery module capable of detecting leakage of electrolyte according to a second embodiment of the present invention.

**[DESCRIPTION OF REFERENCE NUMERALS]**

| | | | |
|---|---|---|---|
| 10: | battery module capable of detecting leakage of electrolyte | | |
| 100: | housing | | |
| 110: | main frame | 112: | bottom |
| 1122: | first bottom portion | 1124: | second bottom portion |
| 1126: | third bottom portion | | |
| 113: | side wall | 114: | side wall |
| 115: | first notch | 116: | second notch |
| 117: | first dam | 118: | second dam |
| O1: | first open section | S1: | first section |
| E1: | first severed portion | | |
| 120: | first end frame | 130: | second end frame |
| P1: | end portion | | |
| 200: | battery cell | 210: | receptor |
| 220: | extension | B: | protruding portion |
| 222: | first extension | 224: | second extension |
| 230: | first terminal | 240: | second terminal |
| 300: | first leakage sensor | | |
| 310: | circuit board | 320: | conductor |
| 322: | first pole conductor | 324: | second pole conductor |
| 326: | first pole terminal | 328: | second pole terminal |
| 400: | second leakage sensor | | |
| 510: | first bus bar frame | | |

### [DETAILED DESCRIPTION OF THE PREFERRED EMBODIMENTS]

The above-described objects, features and advantages will be described in detail hereinafter with reference to the accompanying drawings such that those skilled in the art will be able to implement the technical idea of the present invention. In describing the present invention, when it is determined that a detailed description of prior art related to the present invention unnecessarily obscures the gist of the present invention, the detailed description thereof will be omitted. Hereinafter, preferred embodiments according to the present invention will be described in detail with reference to the accompanying drawings. In the drawings, identical reference numerals are used for indicating identical or similar components.

While "first", "second", etc. are used to describe various elements, these elements are of course not limited by these terms. These terms are only used to distinguish one element from another, and unless specifically stated otherwise, a first element may also be a second element.

Throughout the specification, unless stated otherwise, each element may be singular or plural.

Hereinafter, "arranging an element at upper portion (or lower portion) of an element" or "arranging an element at top (or bottom) of an element" refers to not only "arranging an element to be in contact with upper surface (or lower surface)" but also to "arranging an element above upper surface (or lower surface) with another element interposed therebetween."

Additionally, when an element is described as being "connected to," "coupled with," or "in contact with" another element, it should be understood that the element may be "directly connected to," "directly coupled with," or "directly in contact with" another element, or the element may be "connected to," "coupled with," or "in contact with" another element with yet another element interposed therebetween or via yet another element.

The expressions in singular form used herein comprise expressions in plural form unless the context explicitly dictates otherwise. Terms such as "consists of" or "comprises" used herein should not be construed as necessarily comprising all of the elements or steps described in the specification, and should be construed as not comprising some of the elements or steps, or comprising additional elements or steps.

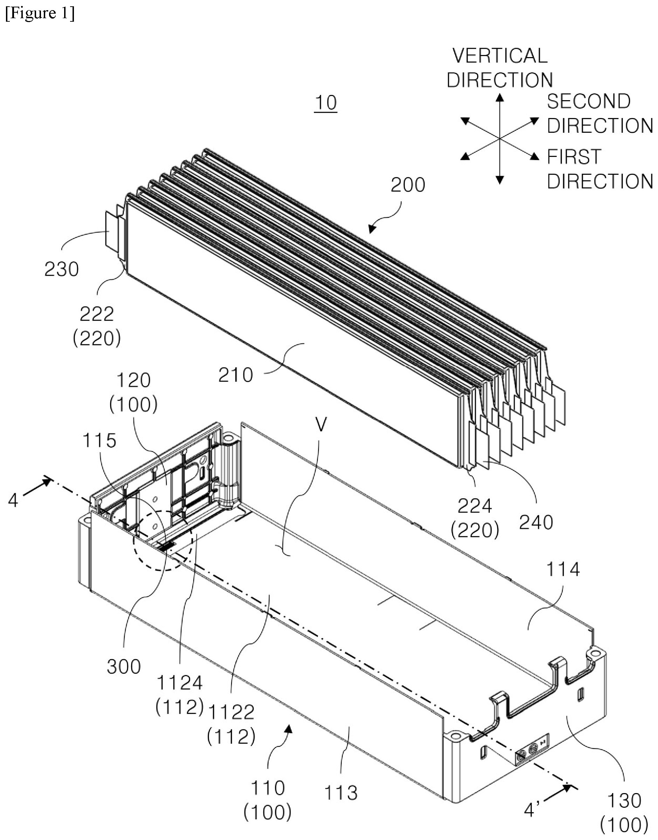

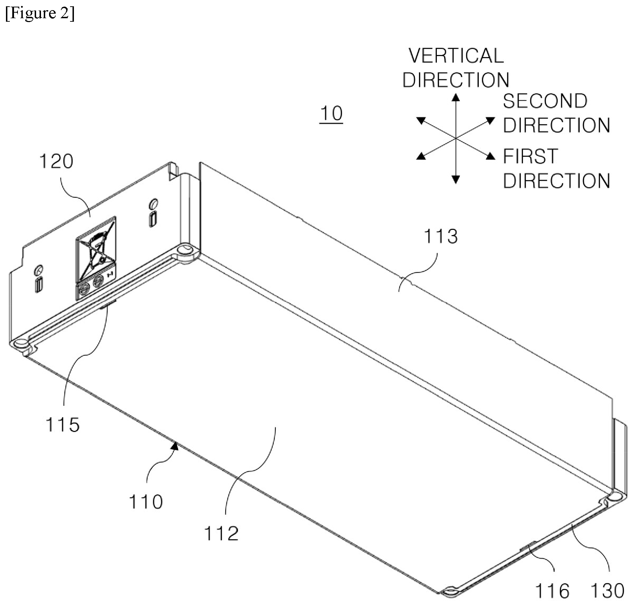

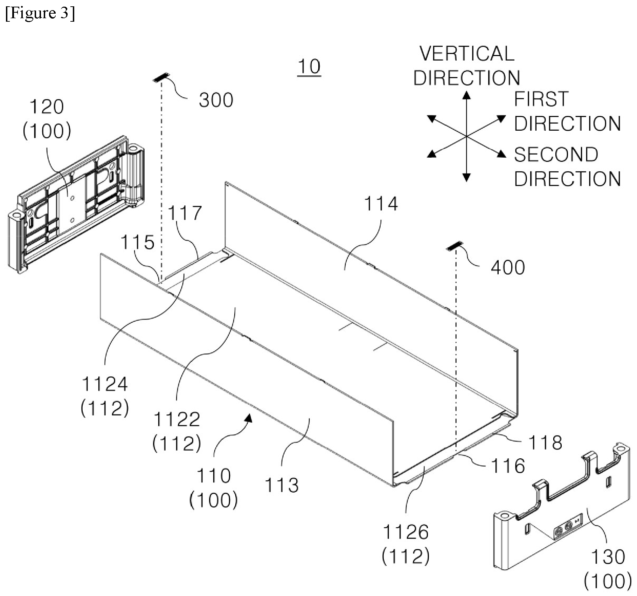

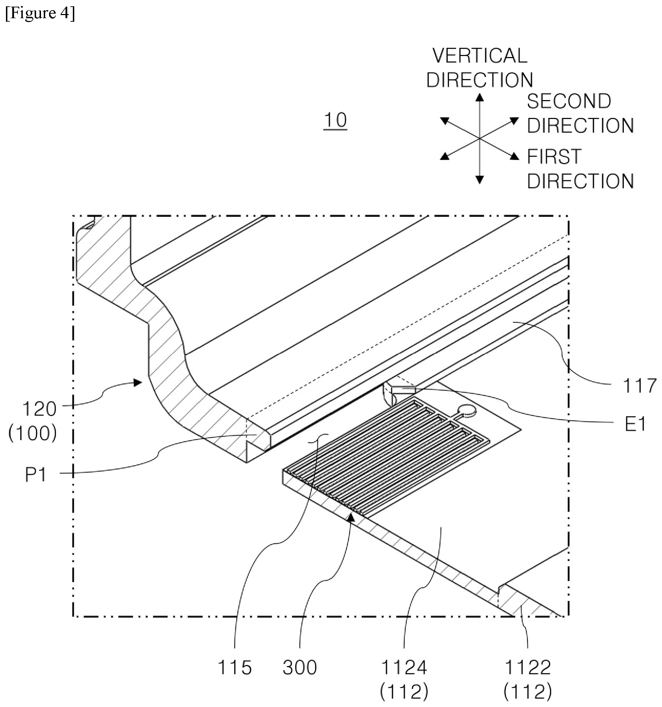

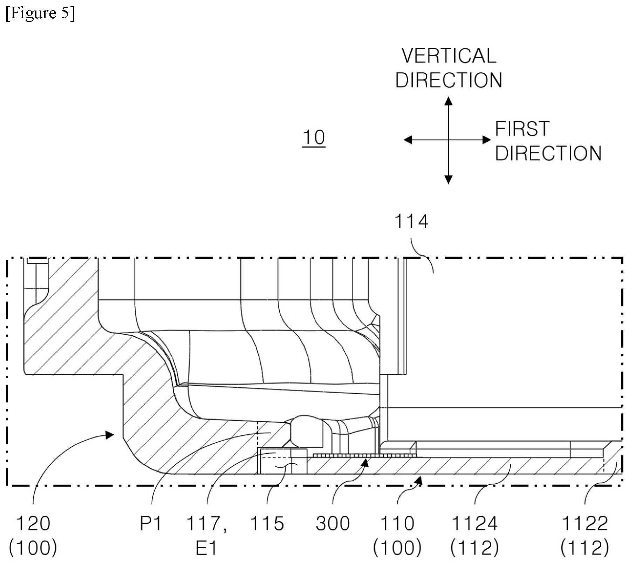

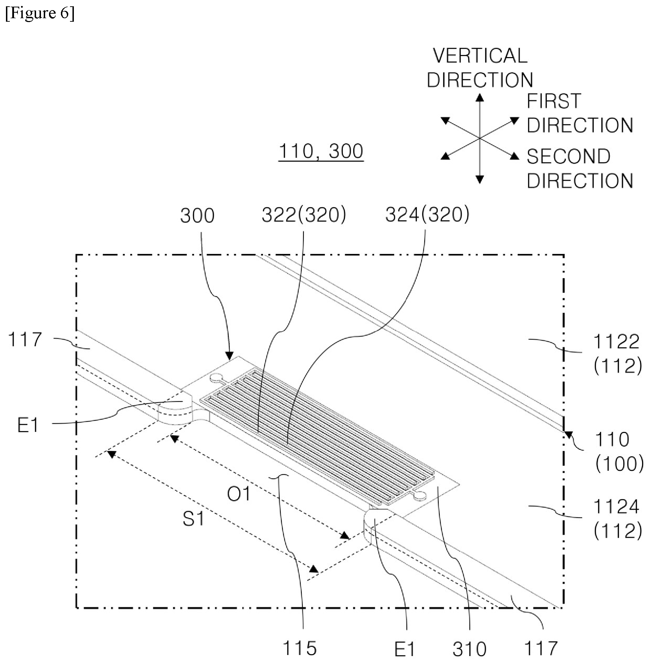

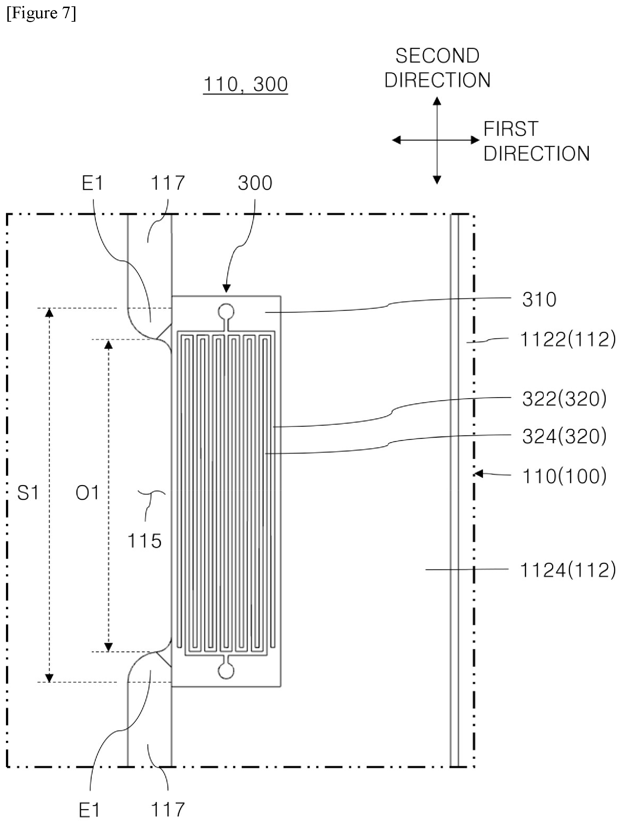

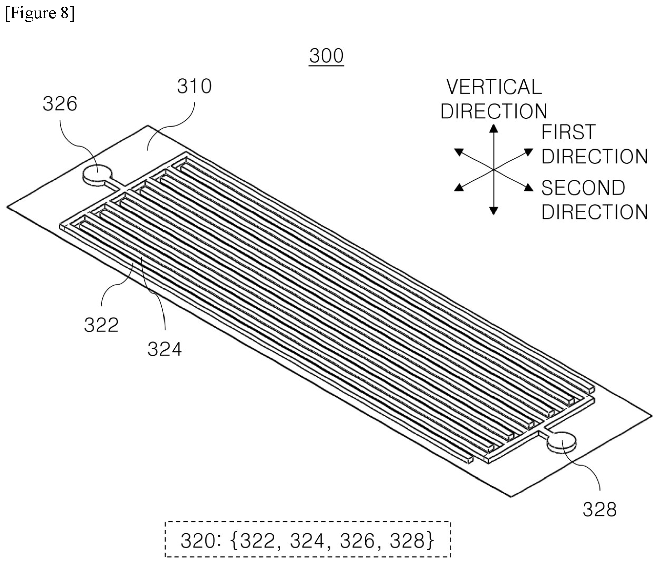

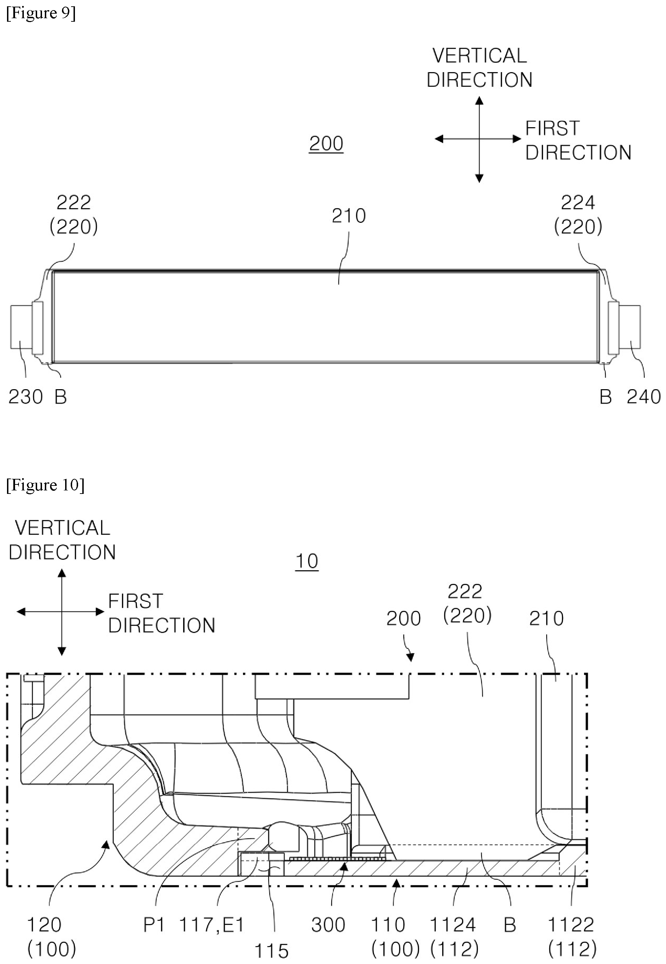

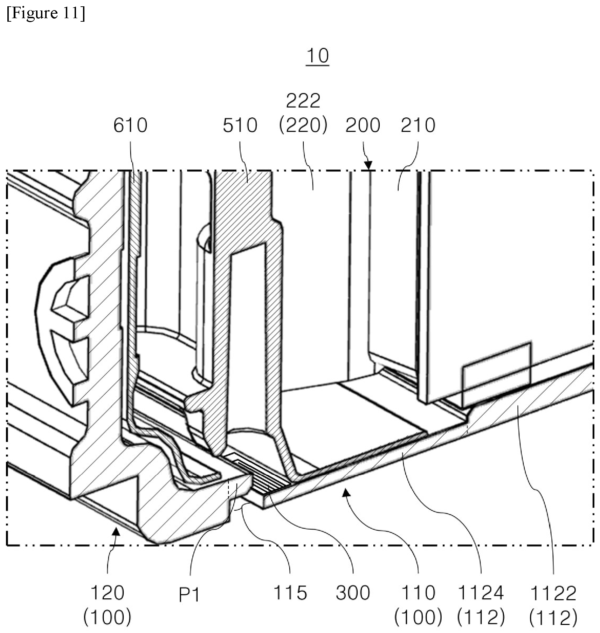

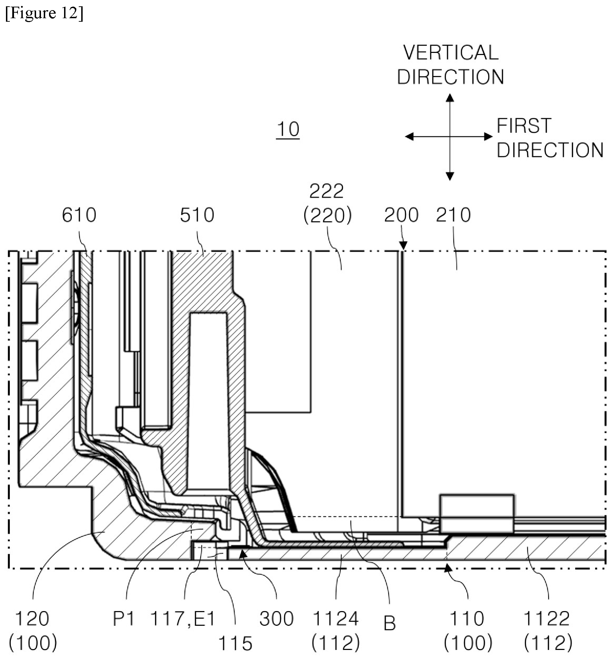

FIG. 1 is a perspective view illustrating a portion of a battery module capable of detecting leakage of electrolyte according to a first embodiment of the present invention. FIGS. 2 and 3 are a bottom surface perspective view and an exploded perspective view, respectively, illustrating the portion of the battery module shown in FIG. 1 without the battery cells. FIGS. 4 and 5 are sectional views enlarging the portion indicated by a dotted line in FIG. 1 taken along line 4-4' of FIG. 1. FIGS. 6 and 7 are enlarged views illustrating the bottom and the first leakage sensor of the portion indicated by a dotted line in FIG. 1. FIG. 8 is a perspective view illustrating the first leakage sensor of FIGS. 1 to 7. FIG. 9 is a front view illustrating the battery cell of FIG. 1. FIG. 10 is a view illustrating the structure of FIG. 5 with the battery cells. FIG. 11 and FIG. 12 are enlarged sectional views enlarging a portion of a battery module capable of detecting leakage of electrolyte according to a second embodiment of the present invention.

### [FIRST EMBODIMENT OF BATTERY MODULE CAPABLE OF DETECTING LEAKAGE OF ELECTROLYTE]

Referring to FIG. 1, a battery module 10 capable of detecting leakage of electrolyte according to a first embodiment may include a housing 100, one or more battery cells 200, and a first leakage sensor 300. The battery module 10 capable of detecting leakage of electrolyte may include a second leakage sensor 400 (FIG. 3). Hereinafter, each element will be described.

### [HOUSING]

Referring to FIGS. 2 and 3, the housing 100 may include: a main frame 110; a first end frame 120; and a second end frame 130.

The main frame 110 may include a bottom 112 and a pair of side walls 113 and 114. The main frame 110 may further include a first notch 115. The main frame 110 may further include a second notch 116. The main frame 110 may further include a first dam 117. The main frame 110 may further include a second dam 118.

The main frame 110 may include a bottom 112 extending in a first direction (e.g., left and right directions) intersecting a vertical direction and in a second direction (e.g., front and rear directions) intersecting the vertical direction and the first direction.

The bottom 112 may include: a first bottom portion 1122; and a second bottom portion 1124. The bottom 112 may further include: a third bottom portion 1126.

The first bottom portion 1122 may correspond to a center portion of the bottom 112 in the first direction. The first bottom portion 1122 may face the receptor 210 of each of the one or more battery cells 200 in the vertical direction (FIGS. 1 and 10).

The second bottom portion 1124 may be located at a first side of the first direction (e.g., left side) of the first bottom portion 1122. The second bottom portion 1124 may have an upper surface lower than that of the first bottom portion 1122. The second bottom portion 1124 may face the first extension 222 of each of the one or more battery cells 200 in the vertical direction (FIGS. 1 and 10).

The third bottom portion 1126 may be located at a second side (e.g., the right side) of the first bottom portion 1122 in the first direction. The upper surface of the third bottom portion 1126 may be lower than the upper surface of the first bottom portion 1122. The third bottom portion 1126 may face the second extensions 224 of each of the one or more battery cells 200 in the vertical direction.

The pair of side walls 113 and 114 may be coupled to both ends of the bottom 112 in the second direction, respectively. The pair of side walls 113 and 114 may be extend in the vertical direction and the first direction.

Referring to FIGS. 4 to 7, the first notch 115 may be disposed at a first end of the first direction (e.g., left end) of the bottom 112 and recessed inward. For example, the first notch 115 may be provided at the first end of the first direction of the second bottom portion 1124. The first notch 115 may connect above and below the bottom 112. As a result, the first notch 115 may discharge the leaked electrolyte out of the housing 100.

The second notch 116 may be disposed at a second end of the first direction of the bottom 112 and recessed inward (FIG. 3). For example, the second notch 116 may be disposed at the second end of the first direction of the third bottom portion 1126. The second notch 116 may connect above and below the bottom 112. As a result, the second notch 116 may discharge the leaked electrolyte out of the housing 100.

The first dam 117 may protrude upward from the upper surface of a first end portion of the first direction of the bottom 112 (FIGS. 3 to 7). The first dam 117 may extend in the second direction or extend obliquely in the first direction toward the second direction. The first dam 117 may not extend in a first open section O1 in the second direction.

Here, the first dam 117 may not extend, for example, when the bottom 112 is not present under the first dam 117 due to the first notch 115 (FIG. 6) or the first dam 117 is blocked by the side walls 113 and 114.

The first dam 117 may include a first severed portion E1 defining the first open section O1. The first severed portion E1 may face the first open section O1. At least a portion of the leaked electrolytes may flow to the first notch 115 through a region adjacent to the first severed portion E1 and corresponding to the first open section O1.

The first dam 117 may be provided at the first end of the first direction of the bottom 112 (FIGS. 3 to 6). Accordingly, the first open section O1 may at least partially overlap a first section S1 in which the first notch 115 is formed in the second direction. In addition, the first severed portion E1 may at least partially overlap the first notch 115 in the first direction (FIGS. 6 and 7).

In the first direction, a second end of the first direction of the first severed portion E1 may be disposed at a point corresponding to the second end of the first direction of the first notch 115 or may be disposed at a second side of the first direction than the second end of the first direction of the first notch 115.

The second dam 118 (FIG. 1) may be inferred from the first dam 117.

The first end frame 120 and the second end frame 130 may cover both ends of the main frame 110 in the first direction. The first end frame 120 and the second end frame 130 may be separated from the main frame 110.

The first end frame 120 and the second end frame 130 may be in contact with the bottom 112 in the first direction. Accordingly, the first end frame 120 and the second end frame 130 may cover the first side of the first notch 115 in the first direction and the second side of the second notch 116 in the first direction, respectively.

The internal space V of the housing 100 may be defined by the main frame 110, the first end frame 120, and the second end frame 130 (FIG. 1).

The first end frame 120 may at least partially cover the first notch 115 from above. For example, the end portion P1 of the first end frame 120 may at least partially cover the first notch 115 from above (FIGS. 4, 5 and 10).

Accordingly, the amount of electrolyte discharged to the outside through the first notch 115 without passing through the first leakage sensor 300 may be reduced. For example, the electrolyte flowing at the first side of the first direction than the first notch 115 or flowing above the first notch 115 or falling into the first notch 115 flow to the bottom 112 and then pass the first leakage sensor 300 rather than flowing directly into the first notch 115 due to the first end frame 120 which at least partially covers the first notch 115 from above. As a result, the accuracy of detection of the leakage of electrolyte from the battery module 10 may be improved.

Meanwhile, matters not mentioned in relation to the second end frame 130 may be inferred from the first end frame 120.

### [BATTERY CELL]

The battery module 10 capable of detecting leakage of electrolyte may include one or more battery cells 200. The one or more battery cells 200 may be arranged in an internal space V of the housing 100. The one or more battery cells 200 may be arranged side by side in the second direction. Hereinafter, the one or more battery cells 200 will be described.

Referring to FIG. 9, the one or more battery cells 200 according to an embodiment may extend in the vertical direction and the first direction. Each of the one or more battery cells 200 may include a receptor 210 and an extension 220. Each of the one or more battery cells 200 may include a first terminal 230. Each of the one or more battery cells 200 may include a second terminal 240.

The receptor 210 may accommodate an electrode assembly and an electrolyte. The receptor 210 may extend in the vertical direction and the first direction.

The extension 220 may extend outward from an edge of the receptor 210. The extension 220 may seal the receptor 210 with the electrode assembly and the electrolyte accommodated therein. The extension 220 may include a first extension 222. The extension 220 may include a second extension 224.

The first extension 222 may be provided at the first side of the first direction of the receptor 210. The second extension 224 may be provided at a second side of the receptor 210 in the first direction.

The first extension 222 may include a protruding portion B (for example, a bat ear) protruding downward farther than the receptor 210. The second extension 224 may have a protruding portion B (for example, a bat ear) protruding downward farther than the receptor 210.

Referring to FIG. 10, the receptor 210 may face the first bottom portion 1122 in the vertical direction, and the first extension 222 may face, in the vertical direction, the second bottom portion 1124 having an upper surface lower than that of the first bottom portion 1122. The second extension 224 may also face, in the vertical direction, the third bottom portion 1126 having an upper surface lower than that of the first bottom portion 1122 (FIGS. 1 and 3). Accordingly, even when the first extension 222 and the second extension 224 have the protruding portions B, the protruding portions B may not be significantly bent or folded by the bottom 112.

The first terminal 230 and the second terminal 240 may be connected to the electrode assembly. For example, the first terminal 230 and the second terminal 240 may be electrode leads connected to the electrode assembly or electrode tabs of the electrodes constituting the electrode assembly. The first terminal 230 may protrude to a first side of the first direction. The second terminal 240 may protrude to a second side of the first direction.

Specifically, the first terminal 230 and the second terminal 240 may protrude outward through the extension 220. For example, the first terminal 230 may protrude to the first side of the first direction through the first extension 222, and the second terminal 240 may protrude to the first side of the first direction through the second extension 224.

The first terminal 230 may be disposed at a first end portion of the first direction of the internal space V of the housing 100. The second terminal 240 may be disposed at a second end portion of the first direction of the internal space V of the housing 100.

Accordingly, the first leakage sensor 300 may be disposed close to the first terminal 230 of the battery cell 200. As a result, the first leakage sensor 300 may be easily connected to an electrical component (e.g., ICB, Interconnect Circuit Board) disposed close to the terminal of the battery cell 200. Thus, the installation and maintenance of the first leakage sensor 300 may be facilitated.

Similarly, the connection of the second leakage sensor 400 to an electrical component (e.g., ICB) disposed close to the terminal of the battery cell 200 may be facilitated such that the installation and maintenance of the second leakage sensor 400 may be facilitated.

### [LEAKAGE SENSOR]

The first leakage sensor 300 may be disposed on an upper surface of the bottom 112. The first leakage sensor 300 may detect a leaked electrolyte from the one or more battery cells 200.

The first leakage sensor 300 may be disposed adjacent to the first notch 115. The first leakage sensor 300 may be disposed in the main frame 110 inner than the first end of the first direction of the first notch 115 (FIGS. 4 to 7).

Accordingly, the first leakage sensor 300 is not only disposed on the upper surface of the bottom 112 of the housing 100 where the electrolytes gather, but is also disposed adjacent to the first notch 115 where the electrolytes are discharged such that electrolyte leaked from the battery module 10 may be accurately and reliably detected and accidents such as fire may be prevented in advance.

In addition, since the first leakage sensor 300 is disposed at the first end of the bottom 112 in the first direction, the first leakage sensor 300 may be easily exposed to the outside. In particular, when the first end frame 120 is separable from the main frame 110, the first leakage sensor 300 may be easily exposed to the outside by separating and removing the first end frame 120. Accordingly, the installation and maintenance of the first leakage sensor 300 may be facilitated.

In addition, since the first leakage sensor 300 is disposed inside the main frame 110 rather than the first end of the first notch 115 in the first direction, the structure of the first leakage sensor 300 may be simplified, and the first leakage sensor 300 may be miniaturized and light. For example, the first leakage sensor 300 may not have a structure that surrounds the entire first notch 115.

The first leakage sensor 300 may be disposed at the second bottom portion 1124. Here, as described above, the first notch 115 may be provided at the first end of the second bottom portion 1124 in the first direction (FIGS. 4 to 7).

Accordingly, the first leakage sensor 300 may be disposed not only at the second bottom portion 1124 where the electrolytes are easily collected due to low position, but also adjacent to the first notch 115 of the second bottom portion 1124 where the electrolytes are discharged. Accordingly, the electrolyte leaked from the battery module 10 may be accurately and reliably detected, and accidents such as fire may be prevented in advance.

In addition, as described above, the first bottom portion 1122 may face the receptor 210 of each of the one or more battery cell 200 in the vertical direction, and the second bottom portion 1124 may face the first extension 222 of each of the one or more battery cell 200 in the vertical direction (FIGS. 1 and 10).

Accordingly, a second bottom portion 1124 having a low-positioned upper surface and provided with a first notch 115 is disposed under the first extension 222 surrounding and sealing the first terminal 230 to cause relatively easy electrolyte leakage such that electrolytes may be easily collected and discharged. Since the first leakage sensor 300 is disposed at the second bottom portion 1124 and adjacent to the first notch 115, the leakage of electrolyte from the battery module 10 may be detected quickly, accurately and reliably, and accidents such as fire may be prevented in advance.

In addition, even when the first extension 222 is provided with a protruding portion B (e.g., a bat ear) protrudes downward farther than the receptor 210 when spread in the vertical direction, the upper surface of the second bottom portion 1124 is positioned lower than the upper surface of the first bottom portion 1122 that supports the receptor 210 such that the protruding portion B may not be greatly bent or folded by the second bottom portion 1124. Accordingly, the sealing of the first extension 222 may be prevented from being released.

The first leakage sensor 300 may be disposed adjacent to the first severed portion E1. At least a portion of the first leakage sensor 300 may be disposed in the first open section O1 (FIGS. 6 and 7).

Accordingly, the first leakage sensor 300 may be disposed not only at a location where electrolytes are easily collected by the first dam 117, but also at a location or nearby the location where electrolytes pass when discharged to the outside. As a result, the leakage of electrolyte from the battery module 10 may be accurately and reliably detected, and accidents such as fires may be prevented in advance.

The first leakage sensor 300 may be disposed adjacent to the first severed portion E1 and disposed at the second side of the first direction than the first severed portion E1. At least a portion of the first leakage sensor 300 may be disposed at the first open section O1 or the first section S1. Here, as described above, the first notch 115 may be disposed at the first end of the bottom 112 in the first direction, and a second end of the first severed portion E1 in the first direction may be disposed at a point corresponding to a second end of the first notch 115 or may be disposed outer than the second end of the first notch 115 (FIGS. 6 and 7).

Accordingly, the first leakage sensor 300 may be disposed inner than the first dam 117 at one end of the bottom 112 in the first direction where most of the electrolytes flowing to the first side of the housing 110 in the first direction gather. In addition, the first leakage sensor 300 may be disposed at or near a portion that the electrolytes passes when the electrolyte is discharged to the outside. As a result, the leakage of electrolyte from the battery module 10 may be accurately and reliably detected and accidents such as fire may be prevented in advance.

Referring to FIG. 8, the first leakage sensor 300 may include a substrate 310. The first leakage sensor 300 may include a conductor 320 forming an electric circuit.

The circuit board 310 may include an insulating film. The circuit board 310 may be flexible. The circuit board 310 may contain a material including PET, PI or PEN. The circuit board 310 may be attached to the bottom 112.

The conductor 320 may be a circuit pattern provided on the circuit board 210.

The conductor 320 may form an electric circuit. When a leaked electrolyte comes into contact with the conductor 320, at least one of the resistance, current and voltage of the electric circuit may change. For example, a small current may flow through the conductor 320 of the electric circuit normally, and when the leaked electrolyte comes into contact with the conductor 320, the resistance of the electric circuit may decrease. As another example, no current may flow through the conductor 320 normally, and when the leaked electrolyte comes into contact with the conductor 320, current may flow through the conductor 320.

Accordingly, the first leakage sensor 300 may be easily implemented at low cost with a simple configuration. In addition, electrolyte leakage may be detected in real time.

The electric circuit formed by the conductor 320 may be connected to an ICB (Interconnect Circuit Board, not shown). When the resistance, etc. of the electric circuit changes, the ICB may detect the change and transmit an electric signal to the BMS (battery management system, not shown).

Here, the ICB may mean a circuit board equipped with at least one element that transmits information between the battery cell and the BMS. For example, the ICB may be equipped with at least one element that transmits information sensed from the electrode lead of the battery cell 200 such as voltage information to the BMS.

In addition, the BMS may refer to a system that monitors the state of the battery cell 200 such as temperature, voltage and current, and controls charging or discharging, etc., by estimating the SOC (State Of Charge) of the battery cell 200 based on the monitored state of the battery cell 200.

The conductor 320 may include one or more first pole conductors 322 and one or more second pole conductors 324. The conductor 320 may include a first pole terminal 326 and a second pole terminal 328.

The one or more first pole conductors 322 and the one or more second pole conductors 324 may extend in a predetermined direction (e.g., the second direction), and alternately arranged side by side. Here, the one or more first pole conductors 322 and the one or more second pole conductors 324 may be spaced apart from each other by a predetermined distance. The one or more first pole conductors 322 and the one or more second pole conductors 324 may form the electric circuit. At least one of the resistance, the current and the voltage of the electric circuit may change when the leaked electrolyte comes into contact with at least one of the one or more first pole conductors 322 and at least one of the one or more second pole conductors 324 simultaneously such that the at least one of the one or more the first pole conductors 322 and the at least one of the one or more second pole conductors 324 are electrically connected via the leaked electrolyte.

Accordingly, the first leakage sensor 300 may be easily implemented at low cost with a simple configuration.

In addition, since the leakage detection area or leakage detection width of the first leakage sensor 300 may be increased or the distance between the first pole conductor 322 and the second pole conductor 324 may be reduced, the performance or sensitivity of the first leakage sensor 300 may be improved.

The one or more first pole conductors 322 may be connected to each other, and the one or more second pole conductors 324 may be connected to each other (FIG. 8).

Accordingly, the first leakage sensor 300 may be easily implemented at low cost with a simple configuration.

When the first leakage sensor 300 is disposed adjacent to the first severed portion E1 of the first dam 117 and at least a portion thereof is disposed in the first open section O1, the predetermined direction in which the first pole conductor 322 and the second pole conductor 324 extend may be parallel to the overall extension direction (e.g., the second direction) of the first dam 117.

Accordingly, the first pole conductor 322 and the second pole conductor 324 of the first leakage sensor 300 may effectively block the portion where the first dam 117 is severed and opened. As a result, the leakage of electrolyte from the battery module 10 may be accurately and reliably detected, and the first leakage sensor 300 may be easily implemented at low cost with a simple configuration, and also be miniaturized.

In addition, since the distance between the first pole conductor 322 and the second pole conductor 324 may be reduced, the performance or sensitivity of the first leakage sensor 300 may be improved.

The first pole terminal 326 and the second pole terminal 328 may form the electric circuit. The first pole terminal 326 and the second pole terminal 328 may be connected to an external object (e.g., an external power source or an external wire). The first pole terminal 326 may be connected to one or more first pole conductors 322, and the second pole terminal 328 may be connected to one or more second pole conductors 324.

The first pole terminal 326 and the second pole terminal 328 may be provided outer than the first open section O1.

The second leakage sensor 400 may be disposed on the upper surface of the bottom 112 (FIG. 3). The second leakage sensor 400 may detect the leaked electrolyte from the one or more battery cells 200.

The second leakage sensor 400 may be disposed adjacent to the second notch 116. The second leakage sensor 400 may be disposed in the main frame 110 inner than the second end of the first direction of the second notch 116.

In addition, since the first and second leakage sensors 300 and 400 may be exposed to the outside, the installation and maintenance of the first and second leakage sensors 300 and 400 may be facilitated. For example, when the first and second end frames 120 and 130 are separated and removed from the main frame 110, the first and second leakage sensors 300 and 400 may be easily exposed to the outside.

In addition, since the first and second leakage sensors 300 and 400 may be exposed to the outside, the installation and maintenance of the first and second leakage sensors 300 and 400 may be facilitated. For example, when the first and second end frames 120 and 130 are separated and removed from the main frame 110, the first and second leakage sensors 300 and 400 may be easily exposed to the outside.

In addition, since the first and second leakage sensors 300 and 400 are located inside the main frame 110 rather than the first ends of the first and second notches 115 and 116 in the first direction, the structure of the first and second leakage sensors 300 and 400 may be simplified, and also be miniaturized and light. For example, the first and second leakage sensors 300 and 400 may not necessarily have a structure that surrounds the entire first and second notches 115 and 116, respectively.

Matters not mentioned in relation to the second leakage sensor 400 may be inferred from the first leakage sensor 300.

### [SECOND EMBODIMENT OF BATTERY MODULE CAPABLE OF DETECTING LEAKAGE OF ELECTROLYTE]

Hereinafter, a battery module 10 capable of detecting leakage of electrolyte according to a second embodiment will be described focusing on the differences from the battery module 10 capable of detecting leakage of electrolyte according to the first embodiment.

Referring to FIGS. 11 and 12, the battery module 10 capable of detecting leakage of electrolyte according to the second embodiment may further include a first bus bar (not shown) and a first bus bar frame 510. The battery module 10 capable of detecting leakage of electrolyte according to the second embodiment may further include a second bus bar (not shown) and a second bus bar frame (not shown). The battery module 10 capable of detecting leakage of electrolyte according to the second embodiment may further include a first inner cover 610 and a second inner cover (not shown).

The first bus bar (not shown) may be disposed at the first end portion of the first direction of the internal space V of the housing 100. The first bus bar may be electrically connected to the first terminal 230 of each of the one or more battery cells 200.

The second bus bar (not shown) may be disposed at a second end of the internal space V of the housing 100 in the first direction. The second bus bar may be electrically connected to the second terminal 240 of each of the one or more battery cells 200.

The first bus bar frame 510 may be disposed above the first leakage sensor 300. The first bus bar frame 510 may support the first bus bar.

Accordingly, the electrolyte that leaks from the first end of the battery cell 200 in the first direction and flows along the surface of the first bus bar frame 510 may easily gather at the bottom 112 and pass through the first leakage sensor 300. Accordingly, the leakage of electrolyte from the battery module 10 may be accurately and reliably detected, and accidents such as fire may be prevented in advance.

A lower end portion of the first bus bar frame 510 may be disposed at a second side of the first direction of the first leakage sensor 300.

Accordingly, since the first notch 115 is provided at one end of the bottom 112 and the first leakage sensor 300 is disposed adjacent to the first notch 115, the first bus bar frame 510 may extend downward even with the first leakage sensor 300 disposed at the bottom 112. When the first bus bar frame 510 extends downward, the first bus bar frame 510 may be stably supported by being in contact with the bottom 112 and interposed between the battery cell 200 and the bottom 112 to improve the insulating property. That is, not only the leakage of electrolyte from the battery cell 200 is accurately and reliably detected, but also the structural stability and insulating property of the battery module 10 may be improved.

The second bus bar frame may be disposed above the second leakage sensor 400. The second bus bar frame may support the second bus bar. A lower end portion of the second bus bar frame may be disposed inner than the second leakage sensor 400 in the first direction.

The first inner cover 610 may be disposed inner than the first end plate 120 and adjacent to and parallel to the first end plate 120. The first end plate 120 may be made of an insulating property material.

The second inner cover (not shown) may be disposed inner than the second end plate 130 and adjacent to and parallel to the second end plate 130. The second end plate 130 may be made of an insulating property material.

The leaked electrolyte may flow along the surfaces of the first bus bar frame 510, the second bus bar frame and the first inner cover 610 or the second inner cover and may be gathered at the bottom 112.

Matters not mentioned in relation to the battery module 10 capable of detecting leakage of electrolyte according to the second embodiment may be inferred from the battery module 10 capable of detecting leakage of electrolyte according to the first embodiment.

It should be understood that the described embodiments are illustrative in all respects and not restrictive, and the scope of the present invention will be indicated by the following claims rather than the described detailed description. And the meaning and scope of the claims to be described later, as well as all changes and modifications derived from the equivalent concept should be interpreted as being comprised in the scope of the present invention.

Although the present invention has been described with reference to the exemplified drawings, it is to be understood that the present invention is not limited to the embodiments and drawings disclosed in this specification, and those skilled in the art will appreciate that various modifications are possible without departing from the scope and idea of the present invention. Further, although the operating effects according to the configuration of the present invention are not explicitly described while describing an embodiment of the present invention, it should be appreciated that predictable effects are also to be recognized by the configuration.

## Claims

1. A battery module capable of detecting an electrolyte leakage, comprising:
a housing 100 comprising; a main frame 110; and a first end frame 120 and a second end frame 130 covering both ends of the main frame 110 in a first direction intersecting a vertical direction, respectively, the main frame 110 comprising: a bottom 112 extending in the first direction and a second direction intersecting the vertical direction and the first direction; and a pair of side walls 113 and 114 coupled to both ends of the bottom 112 in the second direction, respectively, and extending in the vertical direction and the first direction;
one or more battery cells 200 arranged in an internal space V of the housing 100 defined by the main frame 110, the first end frame 120, and the second end frame 130; and
a first leakage sensor 300 disposed on an upper surface of the bottom 112 and detecting a leaked electrolyte from the one or more battery cells 200,
wherein the main frame 110 further comprises a first notch 115 disposed at a first end of the first direction of the bottom 112 and recessed inward, the first notch 115 connecting above and below the bottom 112 to discharge the leaked electrolyte out of the housing 100, and
the first leakage sensor 300 is disposed adjacent to the first notch 115 and disposed in the main frame 110 inner than the first end of the first direction of the first notch 115.

2. The battery module of claim 1, wherein the one or more battery cells 200 are arranged side by side in the second direction and extends in the vertical direction and the first direction, each of the one or more battery cells 200 comprising a first terminal 230 protruding to a first side of the first direction and disposed at a first end portion of the first direction of the internal space V

3. The battery module of one of claims 1 and 2, wherein the bottom 112 comprises: a first bottom portion 1122 corresponding to a center portion of the bottom 112 in the first direction; and a second bottom portion 1124 located at a first side of the first direction of the first bottom portion 1122 and having an upper surface lower than that of the first bottom portion 1122,
the first notch 115 is provided at the first end of the first direction of the second bottom portion 1124, and
the first leakage sensor 300 is disposed at the second bottom portion 1124.

4. The battery module of claim 3, wherein each of the one or more battery cells 200 comprises: a receptor 210 accommodating an electrode assembly and an electrolyte and extending in the vertical direction and the first direction; an extension 220 extending outward from an edge of the receptor 210 and seals the receptor 210 with the electrode assembly and the electrolyte accommodated therein; and a first terminal 230 and a second terminal 240 connected to the electrode assembly and protruding outward through the extension 220,
the extension 220 comprises a first extension 222 provided at the first side of the first direction of the receptor 210,
the first terminal 230 protrudes to the first side of the first direction through the first extension 222,
the one or more battery cells 200 are arranged side by side in the second direction,
the first bottom portion 1122 faces the receptor 210 of each of the one or more battery cells 200 in the vertical direction, and
the second bottom portion 1124 faces the first extension 222 of each of the one or more battery cells 200 in the vertical direction.

5. The battery module of any one of claims 1 to 4, wherein the main frame 110 further comprises a first dam 117 protruding upward from the upper surface of a first end portion of the first direction of the bottom 112 and extending in the second direction or extending obliquely in the first direction toward the second direction without extending in a first open section O1 in the second direction,
the first dam 117 comprises a first severed portion E1 defining the first open section O1,
at least a portion of the leaked electrolytes flows to the first notch 115 through a region adjacent to the first severed portion E1 and corresponding to the first open section O1, and
the first leakage sensor 300 is disposed adjacent to the first severed portion E1 and at least a portion thereof is disposed in the first open section O1.

6. The battery module of claim 5, wherein the first dam 117 is provided at the first end of the first direction of the bottom 112 such that the first open section O1 at least partially overlaps a first section S1 in which the first notch 115 is formed in the second direction, and the first severed portion E1 at least partially overlaps the first notch 115 in the first direction,
in the first direction, a second end of the first direction of the first severed portion E1 is disposed at a point corresponding to the second end of the first direction of the first notch 115 or is disposed at a second side of the first direction than the second end of the first direction of the first notch 115, and
the first leakage sensor 300 is disposed adjacent to the first severed portion E1 and disposed at the second side of the first direction than the first severed portion E1 and at least a portion thereof is disposed at the first open section O1 or the first section S1.

7. The battery module of any one of claims 1 to 6, wherein the first end frame 120 at least partially covers the first notch 115 from above.

8. The battery module of any one of claims 1 to 7, wherein the first leakage sensor 300 comprises a conductor 320 forming an electric circuit, and
at least one of a resistance, a current and a voltage of the electric circuit changes when the leaked electrolyte comes into contact with the conductor 320.

9. The battery module of claim 8, wherein the conductor 320 comprises one or more first pole conductors 322 and one or more second pole conductors 324 extending in a predetermined direction, alternately arranged side by side, and spaced apart from each other by a predetermined distance,
the one or more first pole conductors 322 and the one or more second pole conductors 324 form the electric circuit, and
at least one of the resistance, the current and the voltage of the electric circuit changes when the leaked electrolyte comes into contact with at least one of the one or more first pole conductors 322 and at least one of the one or more second pole conductors 324 simultaneously such that the at least one of the one or more the first pole conductors 322 and the at least one of the one or more second pole conductors 324 are electrically connected via the leaked electrolyte.

10. The battery module of claim 9, wherein the one or more first pole conductors 322 are connected to each other, and
the one or more second pole conductors 324 are connected to each other.

11. The battery module of one of claims 9 and 10, wherein the main frame 110 further comprises a first dam 117 protruding upward from the upper surface of a first end portion of the first direction of the bottom 112 and extending in the second direction or extending obliquely in the first direction toward the second direction without extending in a first open section O1 in the second direction,
the first dam 117 comprises a first severed portion E1 defining the first open section O1,
at least a portion of the leaked electrolytes flows to the first notch 115 through a region adjacent to the first severed portion E1 and corresponding to the first open section O1,
the first leakage sensor 300 is disposed adjacent to the first severed portion E1 and at least a portion thereof is disposed in the first open section O1, and
the predetermined direction is parallel to an overall extending direction of the first dam 117.

12. The battery module of claim 2, further comprising:
a first bus bar disposed at the first end portion of the first direction of the internal space V and electrically connected to the first terminal 230 of each of the one or more battery cells 200; and
a first bus bar frame 510 disposed above the first leakage sensor 300 and supporting the first bus bar.

13. The battery module of claim 12, wherein a lower end portion of the first bus bar frame 510 is disposed at a second side of the first direction of the first leakage sensor 300.

14. The battery module of any one of claims 1 to 13, further comprising: a second leakage sensor 400 disposed on the upper surface of the bottom 112 and detecting the leaked electrolyte from the one or more battery cells 200,
wherein the main frame 110 further comprises a second notch 116 disposed at a second end of the first direction of the bottom 112 and recessed inward, the second notch 116 connecting above and below the bottom 112 to discharge the leaked electrolyte out of the housing 100, and
the second leakage sensor 400 is disposed adjacent to the second notch 116 and disposed in the main frame 110 inner than the second end of the first direction of the second notch 116.
